# FASCICULE DE BREVET EUROPEEN

(11) **EP 2 623 909 B1**
(45) Date de publication et mention de la délivrance du brevet: **17.07.2019**
(21) Numéro de dépôt: 13153641.9
(22) Date de dépôt: 01.02.2013
(51) Int. Cl.: H02S 40/44

(54) **Panneau photovoltaïque à récupération thermique**
Fotovoltaikpaneel mit Wärmerückgewinnung
Photovoltaic panel with heat recovery

(30) Priorité: 02.02.2012 FR 1250975
(43) Date de publication de la demande: 07.08.2013
(73) Titulaire: BASE, 33127 Saint Jean D'Illac (FR)
(72) Inventeur: Ackermann, Sébastien, 33610 CESTAS (FR); Lebreton, Matthieu, 33400 TALENCE (FR); Castellan, Romain, 33185 LE HAILLAN (FR)
(74) Mandataire: Ipside

(56) Documents cités:
- DE-A1- 10 102 918
- FR-A1- 2 727 790
- FR-A1- 2 911 997
- US-A- 4 099 513
- US-A- 4 422 443
- US-A- 4 512 333
- US-A1- 2008 302 405
- US-A1- 2011 192 393
- US-B1- 6 837 236

## Description

La présente invention appartient au domaine des panneaux capteurs d'énergie solaire.

L'invention s'adresse plus particulièrement à des panneaux photovoltaïques refroidis par air avec récupération de l'énergie thermique.

Dans le domaine de l'énergie solaire il est connu de produire de l'énergie sous forme électrique au moyen de cellule photovoltaïques convertissant les photons en courant électrique.

Dans une installation de production électrique solaire, des cellules photovoltaïques sont assemblées sous la forme de panneaux photovoltaïques de dimensions permettant leur manipulation, en général de quelques décimètres carrés à quelques mètres carrés en fonction de l'application.

Un problème bien connu des cellules photovoltaïques tient à la baisse de leurs rendements lorsque leur température augmente. Ainsi une élévation de température de 20 degrés centigrades fait chuter le rendement de 1,5% pour une cellule voltaïque dont le rendement à une température de 20 degrés n'est que de 12,5%, soit une perte de plus de 10% de l'énergie espérée.

Ce problème est d'autant plus critique que les panneaux photovoltaïques sont naturellement appelés à fonctionner avec un fort éclairement solaire qui provoque une élévation naturelle de leur température. Des températures en fonctionnement dépassant 50 degrés centigrades sont parfois observées.

Une solution connue pour limiter la diminution du rendement des panneaux photovoltaïques en fonctionnement consiste à refroidir les panneaux.

Dans le domaine des panneaux photovoltaïques sans concentration du rayonnement solaire, le refroidissement est généralement réalisé en utilisant un liquide (de l'eau ou un liquide antigel caloporteur conventionnel) ou de l'air comme fluide caloporteur.

L'utilisation d'un liquide, comme dans l'agencement présenté dans la demande de brevet FR2911997, est proposé dans certaines installations en particulier lorsqu'une production d'eau chaude est recherchée, ce qui est par exemple le cas pour de petites installations domestiques.

Un inconvénient de ce type de solution tient au fait que le panneau ainsi refroidi est complexe à réaliser du fait des nécessaires étanchéités qui doivent être assurées pour le circuit du liquide, qu'il est plus complexe à installer du fait de son poids qui se trouve sensiblement augmenté, et que la recherche d'une eau chaude à application sanitaire ou de chauffage nécessite d'élever la température du liquide à une valeur incompatible avec la température recherchée pour les cellules photovoltaïques.

Dans le domaine du refroidissement par air, les solutions connues consistent en un assemblage d'un panneau photovoltaïque et d'un panneau capteur thermique.

Dans une première solution, le capteur photovoltaïque est fixé en façade et au dessus d'un panneau capteur thermique microporeux, un flux d'air aspiré par le panneau capteur thermique circulant sur une face du panneau photovoltaïque se réchauffe au contact de ce dernier panneau en assurant un refroidissement du panneau. Un inconvénient de ce type de solutions tient au fait que le refroidissement du panneau photovoltaïque est peu efficace du fait d'un fonctionnement ouvert de la circulation d'air et que le fonctionnement, et donc l'efficacité, du panneau capteur thermique est perturbé par la présence du panneau photovoltaïque.

Dans d'autres solutions connues telles que décrites dans les demandes de brevets US 4099513 et US 4422443, de l'énergie thermique est transmise depuis des panneaux absorbants vers un fluide circulant dans un caisson. Toutefois, ce type de dispositif ne permet pas de récupérer de l'énergie électrique.

Il est également connu du document FR 2727790 de monter un capteur photovoltaïque sur un caisson ouvert en fixant le cadre du capteur sur les bords du caisson. Pour limiter les pertes thermiques, le caisson sur lequel est fixé le capteur est lui même placé dans une enceinte isolante ce qui conduit à une solution complexe et volumineuse dans laquelle la température du capteur est totalement tributaire du refroidissement forcé par le caisson ventilé.

Dans une autre solution connue, le panneau photovoltaïque est placé à l'intérieur d'un panneau capteur thermique, en pratique fixé dans un caisson comportant une face transparente du côté de laquelle est orienté le panneau photovoltaïque et de l'air circule dans le caisson sur toutes les faces du panneau photovoltaïque dans le but d'en assurer le refroidissement. Ce type de solution présente les inconvénients d'un montage compliqué du fait que le panneau photovoltaïque est à l'intérieur du caisson et d'une diminution du rendement du panneau photovoltaïque en raison d'une lame transparente supplémentaire devant le panneau photovoltaïque qui réfléchit et absorbe une partie du rayonnement solaire qui est alors perdue. En outre bien que le panneau photovoltaïque soit balayé sur ses deux faces par l'air de refroidissement, les échanges thermiques entre l'air et le panneau photovoltaïque restent limités du fait d'un écoulement laminaire. La présente invention concerne un panneau selon la revendication 1.

La présente invention apporte une solution à ces problèmes de l'art antérieur en proposant une solution performante de panneau associant la production d'électricité photovoltaïque et de chaleur au moyen d'un panneau de production d'énergie électrique et d'énergie thermique, comportant un capteur à cellules photovoltaïques , ledit capteur comportant un cadre périphérique et ledit capteur étant fixé sur un système d'échange thermique destiné à la circulation d'un fluide caloporteur consistant principalement en un caisson ventilé comportant un fond fermé, une bordure fermée et une face supérieure ouverte, le caisson ventilé comportant au moins une ouverture d'arrivée et au moins une ouverture de sortie d'un gaz destiné à traverser le caisson ventilé.

Plus particulièrement, le capteur est fixé par une face inférieure dudit capteur sur la bordure et du côté de la face supérieure dudit caisson ventilé de sorte à créer un volume fermé du caisson ventilé, et des dimensions du caisson ventilé sont voisines et légèrement inférieures à des dimensions en plan du capteur de sorte qu'une face inférieure du capteur soit appliquée sur une face supérieure ouverte dudit caisson ventilé sans que le cadre ne vienne en interférence avec ledit caisson ventilé, ledit cadre emboîtant sur ledit caisson ventilé.

Suivant cet agencement du panneau, le capteur est exposé directement au rayonnement solaire et son refroidissement par un gaz tel que de l'air est réalisé efficacement sur la face opposée au rayonnement solaire. En outre, l'assemblage du panneau est réalisable simplement en rapportant le capteur, de constitution relativement fragile, sur le caisson ventilé préalablement réalisé.

Dans une forme préférée de réalisation du panneau au moins une traverse, et avantageusement une pluralité de traverses sensiblement similaires ou identiques, comportant au moins une âme et comportant une semelle supérieure est fixée par une face supérieure de la semelle de la traverse considérée à la face inférieure du capteur. La traverse s'étend sensiblement d'un bord à un bord opposé du caisson ventilé, par exemple suivant une largeur X du caisson ventilé, et la ou les âmes de la traverse se projettent dans le volume fermé du caisson ventilé sur une hauteur h inférieure à une épaisseur E du caisson ventilé.

La ou les traverses ainsi agencées forment un échangeur thermique solidaire du capteur en raison de sa surface de contact avec les semelles des traverses qui sont en mesure de transférer la chaleur du capteur vers le gaz circulant à
l'intérieur du caisson ventilé du fait de l'extension limitée à l'intérieure du caisson ventilé des âmes des traverses.

Avantageusement, afin de favoriser le transfert de la chaleur du capteur vers les traverses, la semelle de la traverse, et de préférence de chaque traverse, est fixée par collage sur la face inférieure du capteur en utilisant une colle à conduction thermique améliorée.

Pour assurer une perte de charge acceptable de l'écoulement dans le caisson, la hauteur **h** d'une âme de traverse est égale ou inférieure à la moitié de l'épaisseur **E** du caisson ventilé.

Dans une forme de réalisation, afin de provoquer et entretenir une turbulence de l'écoulement du gaz dans le caisson ventilé et d'augmenter les échanges thermiques entre le gaz et les traverses, la ou les âmes de chaque traverse comportent des ouvertures réparties sur une longueur de la traverse. Avantageusement, l'ensemble des ouvertures d'une âme de traverse représente une surface totale ouverte comprise entre 30% et 70% d'une surface de l'âme considérée.

Dans une forme de réalisation, la semelle supérieure d'une traverse comporte des ouvertures réparties sur la longueur de ladite traverse. Ainsi il est possible de réaliser les traverses par pliage d'une tôle dans laquelle les ouvertures ont été préalablement réalisée sur toute la surface et la présence d'ouvertures dans la semelle supérieure permet un collage plus intime de la traverse sur la face inférieure du capteur du fait d'une meilleure migration de la colle à l'interface de collage.

Dans une forme de réalisation des traverses, une traverse comporte à chacune de ses extrémités une extension de la semelle par rapport à l'âme de la traverse, et la longueur de la traverse est telle que chaque extension de semelle est en appui sur un retour de bordure de la bordure du caisson ventilé.

Suivant une forme de réalisation de ces traverses, chaque extension de semelle d'une traverse comporte un élément d'ancrage, saillant sur une face de la semelle du côté de l'âme, qui coopère avec un évidement de forme complémentaire, par exemple une fente, agencée dans le retour de bordure de la bordure du caisson ventilé.

Dans un mode de réalisation, le panneau comporte une pluralité de traverses pour assurer les échanges de chaleur entre le capteur et le gaz circulant dans le caisson ventilé. Les traverses sont par exemple agencées sensiblement parallèles entre elles pour une transmission homogène de la chaleur.

Dans une forme de réalisation du panneau, le caisson ventilé comporte également un ou plusieurs longerons fixés au caisson ventilé suivant la longueur **L** ou la largeur **C** du caisson ventilé, qui apportent une rigidité supplémentaire au caisson et dont une âme de chaque longeron détermine dans le caisson ventilé des sous-volumes séparés par le longeron. Pour permettre la circulation du gaz entre les sous-volumes voisins, l'âme d'un longeron comporte des ouvertures réparties sur une longueur du longeron.

Une ouverture d'arrivée au moins et une ouverture de sortie au moins de gaz du caisson ventilé sont agencées proches de côtés opposés du caisson ventilé et de sorte à déboucher dans des sous-volumes situés respectivement sur un bord du caisson ventilé et sur un bord opposé du caisson ventilé. Suivant cet agencement un gaz peut circuler entre l'ouverture d'arrivée et l'ouverture de sortie en traversant totalement le caisson et en circulant par les ouvertures des âmes des longerons. Le cas échéant, le caisson comporte plusieurs ouvertures d'arrivée et ou plusieurs ouvertures de sortie de gaz qui permettent de contrôler plus précisément le flux de gaz dans le caisson.

Pour assurer le passage du gaz sans perte de charge importante entre les sous-volumes délimités par les âmes des longerons, les ouvertures dans les âmes et réparties sur la longueur d'un longeron sont de préférence de grandes dimensions et représentent une surface totale supérieure à 50% d'une surface de l'âme du longeron.

Dans une forme de réalisation, la ou les ouvertures d'arrivée du caisson ventilé sont pourvues de manchons de raccordement, un axe de chacun des manchons étant orienté de sorte à converger vers la face inférieure du capteur dans le volume fermé du caisson ventilé ce qui permet d'introduire le gaz dans le caisson avec une composante de vitesse qui dirige le gaz vers la surface inférieure du capteur pour améliorer les échanges thermiques entre le gaz et le capteur.

Lorsque le caisson ventilé du panneau comporte un ou des longerons et une ou des traverses, les longerons et les traverses se croisent, formant un maillage au niveau de la face supérieure du caisson ventilé, et dans une forme de réalisation chaque longeron comporte à l'emplacement de chaque intersection du longeron avec une traverse un évidement dans lequel est placée l'âme de la traverse, ou des évidements lorsque la traverse comporte plusieurs âmes, ce qui permet d'assurer le croisement de la traverse et du longeron sans nuire à la continuité mécanique et thermique des traverses sur lesquelles est fixé le capteur.

Dans une forme préférée de réalisation du panneau, pour sa simplicité de fabrication industrielle et pour être adapté aux capteurs produits suivant des formats standard de forme carrée ou rectangulaire, le caisson ventilé a une forme d'ensemble parallélépipédique rectangle et le capteur comporte un cadre à l'intérieur duquel cadre le caisson ventilé est emboîté.

La description détaillée d'un mode de réalisation de l'invention est faite en référence aux figures qui illustrent à titre d'exemples non limitatifs :
figure 1 : un premier exemple de panneau suivant l'invention, vu en perspective et partiellement écorché ;
figure 2 : une variante de l'exemple de panneau de la figure 1 représenté sans le capteur photovoltaïque, vu en perspective de sorte à montrer l'intérieur du caisson ventilé;
figure 3 : une coupe transversale suivant une direction parallèle à un longeron d'un panneau conforme au panneau de la figure 1 ;
figure 4 : une vue en perspective d'une traverse isolée du caisson ventilé de l'exemple de panneau de la figure 1 ;
figure 5 : une coupe transversale suivant une direction parallèle à une traverse d'un panneau conforme au panneau de la figure 1 ;
figure 6 : un deuxième exemple de panneau suivant l'invention, vu en perspective et partiellement écorché comportant un caisson raidi intégral ;
figure 7 : une coupe du panneau de la figure 6 dans un plan perpendiculaire au plan du capteur et parallèle aux génératrices de traverses ;
figure 8 : une illustration schématique de l'écoulement du gaz dans le panneau sur une vue en coupe longitudinale du panneau en fonctionnement ;
figure 9 : des courbes de production électricité mesurée expérimentalement avec un panneau suivant l'invention et avec un capteur de mêmes caractéristiques sans caisson ventilé associé.

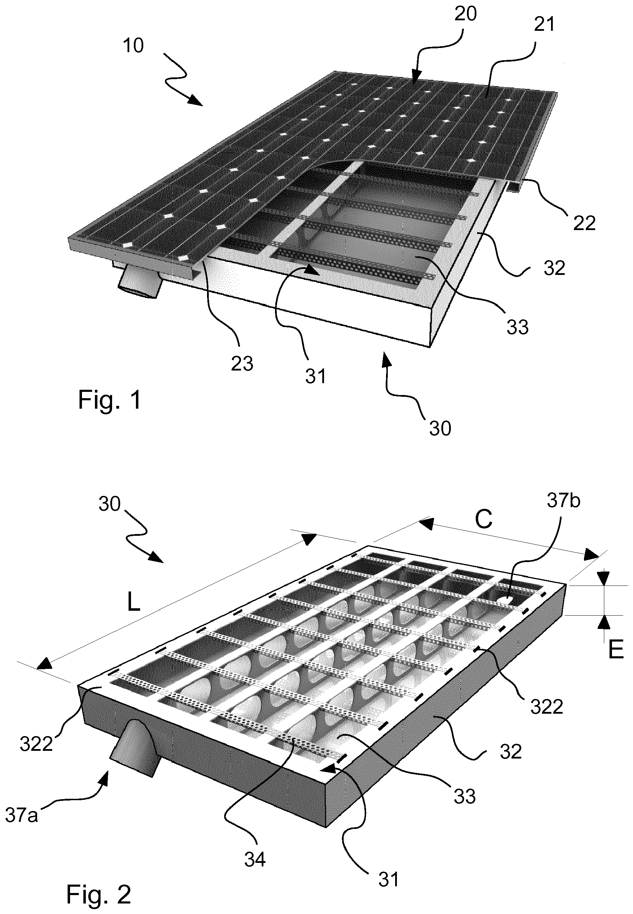

La figure 1 représente un panneau 10 assemblé suivant un premier mode de réalisation.

Le panneau 10 comporte un capteur 20 photovoltaïque et un caisson ventilé 30, ledit capteur étant fixé sur une face supérieure 31 dudit caisson ventilé.

Le capteur 20 se présente sous la forme connue d'un assemblage de cellules photovoltaïques 21 destinées à convertir le rayonnement solaire en énergie électrique. Les cellules 21 sont agencées sur un substrat, par exemple une feuille en verre, en fonction des caractéristiques, en particulier de tension et de courant électrique, souhaitées pour le capteur en fonctionnement.

Également de manière connue, le capteur 20 comporte un cadre 22, par exemple réalisé avec une cornière métallique, qui renforce et protège le capteur 20 sur des bords dudit capteur.

La forme en plan du capteur 20 est, sur l'exemple illustré sur la figure 1, rectangulaire, ce qui s'avère le cas le plus général et le plus pratique, mais cette forme n'est pas imposée.

Le caisson ventilé 30 a dans ce cas la forme générale d'un parallélépipède rectangle présentant une dimension transversale, l'épaisseur **E**, a priori inférieure aux autres dimensions : une largeur **C** et une longueur **L**.

La largeur **C** et la longueur **L** sont voisines des dimensions en plan du capteur 20 et sont légèrement inférieures de sorte qu'une face inférieure 23 du capteur 20 soit appliquée sur une face supérieure 31 ouverte du caisson ventilé 30 sans que le cadre 22 ne vienne en interférence avec le caisson ventilé 30, ledit cadre étant emboîté sur ledit caisson ventilé.

Comme illustré sur la figure 1, une bordure 32 du caisson ventilé 30 est distante du cadre 22 du capteur 20 et sans contact direct avec ledit cadre de sorte à limiter des flux de chaleur entre ledit caisson et ledit cadre.

Le caisson ventilé 30 comporte des parois formant une bordure 32 pleine et un fond 33 également plein, la face supérieure 31, opposée au fond 33, étant globalement ouverte lorsque le capteur 20 est absent.

Les parois sont réalisées en un matériau ou en un assemblage de matériaux conférant au caisson ventilé 30 une rigidité suffisante pour que ledit caisson soit autoporteur, c'est-à-dire d'une rigidité permettant de manipuler le panneau 10 sans que ledit panneau ne se déforme sensiblement, ce qui permet d'agencer sur le caisson ventilé 30 des éléments d'accrochage (non représentés) dudit panneau à des structures destinées à fixer ou à orienter ledit panneau.

Les parois sont réalisées par exemple avec des matériaux métalliques, par exemple en un alliage d'aluminium qui présente l'avantage d'être relativement léger et d'être disponible dans des nuances présentant des qualités de résistance à la corrosion, ou dans des matériaux composites comportant des fibres de verre, d'aramide ou autres, maintenues dans une résine polymère dure, de tels matériaux composites étant bien connus par ailleurs dans de nombreuses formes, ou encore dans un matériau polymère pouvant être formé par injection ou par formage d'une plaque d'un matériau thermoplastique.

Au niveau de la face supérieure 31 du caisson ventilé 30, le panneau 10 comporte des traverses 34 qui s'étendent d'un bord à un bord opposé du caisson ventilé.

Dans les exemples illustrés, les traverses sont sensiblement parallèles entre elles et parallèles à un des bords du caisson ventilé correspondant à la largeur C, et sont régulièrement espacées.

Cet agencement, simple à réaliser sur le plan industriel, n'est cependant pas imposé et les traverses 34 peuvent être agencées différemment, par exemple parallèles entre elles mais obliques par rapport au bord de la largeur C, ou encore obliques mais avec une pente alternée entre des traverses voisines ou encore orientée sensiblement suivant la direction de la longueur L du caisson ventilé (cas non illustrés).

Toutes les traverses 34 présentent une même forme générale de cornière ayant un profil formé d'une âme 341 au moins, de hauteur h, fixée sensiblement sur sa longueur à une semelle 342 de largeur X.

Une surface supérieure de la semelle 342 est orientée comme la face supérieure 31 du caisson ventilé et l'âme 341 est sensiblement perpendiculaire audit plan de la face supérieure 31.

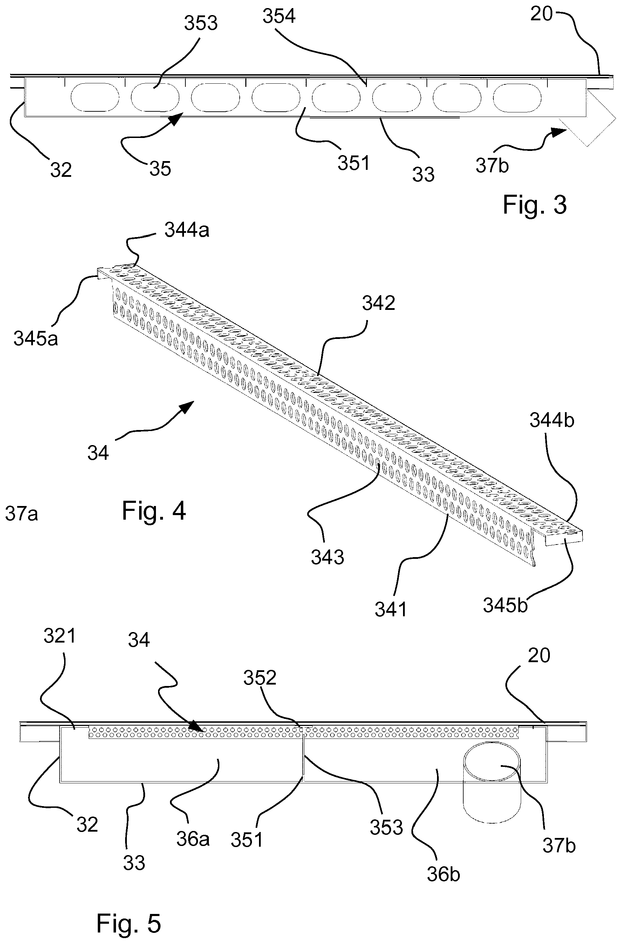

Dans la forme de réalisation illustrée sur les figures 1 et 2, et en particulier visible sur la figure 4, la traverse 34 a la forme d'un profilé en L inversé. D'autres formes sont cependant possibles comme par exemple une forme de profilé en T ou en U inversé.

La traverse 34 comporte également des ouvertures 343 traversantes réparties sur l'âme 341 et le cas échéant, comme dans l'exemple illustré sur la figure 4, la semelle 342. Les ouvertures 343 sont sur l'âme régulièrement réparties et suffisantes en nombre et en dimensions pour que leurs surfaces cumulées représentent entre 30% et 70%, typiquement 50%, de la surface de l'âme 341.

Dans l'exemple de réalisation illustré sur la figure 4, la semelle 342 comporte des ouvertures suivant une répartition équivalente à celle de l'âme 341 dans la mesure où la traverse est réalisée par pliage d'une tôle préalablement percée sur toute sa surface. Toutefois, la présence de perçage dans la semelle 342 n'est pas imposée et sera préférée pour des raisons industrielles de fabrication ou si de tels perçages améliorent la qualité d'un collage de ladite semelle sur le capteur 20.

La hauteur **h** de l'âme 341 d'une traverse est égale ou inférieure à 0,5 fois une hauteur intérieure du caisson ventilé, sensiblement l'épaisseur **E** si les épaisseurs des parois sont petites devant les dimensions du caisson, de sorte qu'un flux de gaz puisse circuler entre les âmes 341 des traverses et le fond 33 du caisson ventilé.

Dans une forme de réalisation telle qu'illustrée sur la figure 4, l'âme 341 est limitée en extension à des extrémités de la traverse 34 de sorte que la semelle 342 comporte une extension d'appui 344a, 344b qui vient en appui sur la bordure 32 du caisson ventilé, et plus particulièrement sur un retour de bordure 321 de la face supérieure 31 du caisson ventilés.

Dans une forme de réalisation des extensions d'appui 344a, 344b, chaque extension d'appui comporte un élément d'ancrage 345a, 345b saillant sur une face de la semelle située du côté de l'âme et qui est engagé dans une zone d'ancrage 322 du retour de bordure 321 dont la forme en creux est complémentaire pour assurer un positionnement stable de la traverse 34.

Dans la forme de réalisation illustrée sur la figure 4, l'élément d'ancrage 345a, 345b est formé par une extrémité de la semelle 342 pliée sensiblement à angle droit en direction de l'âme 341 et la zone d'ancrage 322 a une forme de fente, de largeur et longueur adaptée, dans le retour de bordure 321.

Dans ce cas, d'une part, lors de l'assemblage du caisson ventilé 30 chaque traverse 34 est précisément positionnée par engagement des éléments d'ancrage dans les zones d'ancrage et d'autre part, après assemblage, ledit engagement assure un maintien de la traverse dans la position souhaitée où elle est si besoin fixée à la bordure 32 par exemple par collage, ou par soudure ou brasage, ou par encliquetage ou par toute autre procédé adapté aux matériaux à assembler.

En outre, les traverses 34, dont une fonction principale est d'assurer un transfert de chaleur entre le capteur 20 et un gaz dans le caisson ventilé 30, sont réalisées dans un matériau bon conducteur de la chaleur.

Les traverses sont par exemple réalisées en métal tel qu'un alliage d'aluminium, dont les propriétés de conduction thermique sont connues.

Autant que de besoin, le caisson ventilé 30 comporte, de manière optionnelle, des longerons 35 intérieurs au volume formé par les parois dudit caisson ventilé.

Dans l'exemple de panneau illustré sur la figure 1, le caisson ventilé comporte un seul longeron 35 orienté suivant la longueur **L** et s'étendant d'un bord dudit caisson ventilé à un bord opposé suivant la direction de la longueur **L**.

Dans la variante de panneau illustré sur la figure 2, le caisson ventilé comporte plusieurs longerons 35, trois dans ce cas, également orientés suivant la longueur **L** du caisson ventilé.

Le ou les longerons 35, lorsque le caisson ventilé 30 en comporte, assurent un renforcement du caisson ventilé et en particulier permettent d'en augmenter la rigidité. Le ou les longerons peuvent également avoir d'autres orientations par rapport aux bords du caisson ventilé 30 comme par exemple être orientés suivant la direction de la largeur **C** dudit caisson ventilé.

Comme illustré sur la coupe de la figure 5, le longeron 35, unique dans cet exemple de réalisation, comporte une semelle supérieure 352 et une âme 351 qui détermine un sous-volume 36a, 36b du caisson ventilé 30 sur chaque côté dudit longeron.

Comme visible sur la coupe de la figure 3, l'âme 351 comporte de larges ouvertures 353 réparties régulièrement sur l'âme 351 du longeron et dont une surface d'ouverture cumulée représente au moins 60% d'une surface de la dite âme, de sorte à présenter une résistance réduite à une circulation d'un gaz à l'intérieur du caisson ventilé 30 entre les sous-volumes 36a, 36b séparés par le longeron 35.

La semelle supérieure 352 du longeron, est située sur un bord de l'âme 351 dudit longeron opposé au fond 33 du caisson ventilé et sensiblement dans un plan défini par la face supérieure de la bordure 32 et plus particulièrement du retour de bordure 321, de sorte que la semelle 342 d'une traverse est en appui sur une face supérieure de la semelle 352 du longeron.

Le longeron 35 comporte également au droit de chaque traverse 34 un évidement dans la semelle 352 et l'âme 351 du longeron, dans lequel évidement est positionnée l'âme 341 de la traverse.

Le caisson ventilé 30 assemblé de la figure 2, est un exemple de réalisation d'un caisson comportant plusieurs longerons 35.

Les longerons sont agencés dans cet exemple sensiblement parallèles entre eux dans le caisson ventilé 30, régulièrement espacés de sorte à déterminer des sous-volumes de dimensions voisines, et sont également de formes similaires, de préférence identiques pour des raisons de production industrielle.

Le caisson ventilé 30 comporte également au moins une ouverture d'entrée 37a, et au moins une ouverture de sortie 37b d'un flux de gaz entre l'intérieur dudit caisson ventilé et son extérieur. Dans une forme simple de réalisation comme dans les panneaux illustrés, le caisson ventilé comporte une ouverture d'entrée et une ouverture de sortie.

La section de passage du gaz des ouvertures 37a, 37b est fonction du volume intérieur du caisson ventilé considéré et du débit de gaz en fonctionnement qui sera choisi de sorte à maintenir les pertes de charges à un niveau accepté.

Comme illustré sur les figures, un manchon solidaire du caisson ventilé 30 est associé à chacune des ouvertures 37a, 37b pour assurer le raccordement de gaines d'arrivée et de départ du gaz devant circuler dans le caisson ventilé.

Avantageusement un manchon de raccordement, au moins pour un manchon d'une ouverture d'entrée 37a est fixé sur le caisson ventilé avec un axe dudit manchon orienté de sorte à converger vers la face inférieure 23 du capteur 20 dans le volume fermé dudit caisson ventilé.

Les ouvertures d'entrée 37a et de sortie 37b sont par ailleurs agencées distantes sur le caisson ventilé de sorte que le gaz devant circuler dans le caisson ventilé circule suivant un cheminement autant que possible perturbé et long à l'intérieur du caisson ventilé et par ailleurs circule dans les différents sous-volumes déterminés par le ou les longerons 35.

Ce résultat est obtenu en agençant les ouvertures 37a, 37b de préférence sur des côtés opposés du caisson ventilé 30 et pour qu'elles débouchent, lorsque le caisson ventilé comporte un ou plusieurs longerons 35, dans les deux sous-volumes les plus éloignés de sorte à induire une composante d'un écoulement du gaz circulant dans le caisson ventilé perpendiculaire aux âmes 341 des traverses.

Dans le caisson ventilé 30, tel que représenté assemblé sur la figure 2, les semelles 342 des traverses 34 forment une surface d'appui du capteur 20 sur la face supérieure 31 dudit caisson ventilé.

Le capteur 20 et les semelles 342 des traverses 34 sont fixés entre eux par collage.

Le collage est réalisé de préférence avec une colle à conduction thermique améliorée. De telles colles sont connues, plus ou moins performantes en termes de résistance mécanique des collages et de leurs conductions thermiques. Par exemple la colle de la société ACC Silicones Ltd diffusée sous la référence commerciale AS1803.

Le capteur 20 est également fixé à la bordure 32 du caisson ventilé de sorte à assurer une étanchéité entre le capteur et le caisson ventilé.

La fixation du capteur 20 sur la bordure 32 du caisson ventilé est par exemple réalisée par collage au moyen d'un adhésif adapté avec ou sans interposition de joints. L'étanchéité recherchée a pour objectif d'une part d'éviter que du gaz circulant dans le caisson ventilé 30 sorte ou pénètre de manière non contrôlée, ce qui constituerait d'une part des pertes thermiques et d'autre part des source de déséquilibrage d'un système de circulation forcé du gaz dans le panneau 10 ou dans un réseau de panneaux, et d'autre part d'éviter des infiltrations d'eau dans le caisson ventilé, infiltrations dont le risque est important compte tenu de l'exposition du panneau aux intempéries lors de son utilisation.

Lors de la réalisation du panneau 10 suivant une méthode d'assemblage, les traverses 34 sont d'abord fixées au caisson ventilé 30, puis la colle est déposée en quantité suffisante sur les semelles 342 des traverses et ou sur la face arrière 23 du capteur, puis le capteur 20 est appliqué sur le caisson ventilé 30 pour que le capteur adhère par une surface inférieure dudit capteur aux semelles 342 des traverses 34 et également pour que la colle remplisse partiellement les ouvertures 343 des dites semelles de traverses lorsque celles-ci en sont pourvues.

Suivant une autre méthode d'assemblage lors de la réalisation du panneau 10, la colle est déposée en quantité suffisante sur les semelles 342 des traverses et ou sur la face arrière 23 du capteur, puis les traverses 34 sont appliquées sur la face arrière du capteur pour y être fixées, puis le capteur 20, sur la face arrière duquel les traverses ont été fixées, est appliqué sur le caisson ventilé 30 pour y être fixé par les moyens prévus, collage ou autre.

De manière conventionnelle le panneau 10 comporte des moyens de raccordement électrique, par exemple un bornier électrique, non représenté sur les figures, généralement solidaire du capteur 20.

Un tel bornier électrique est de préférence situé à proximité d'un bord du capteur 20 de sorte à rester à l'extérieur du volume ventilé du caisson.

Dans une autre forme de réalisation, le bornier électrique est situé à l'intérieur du caisson ventilé 30 et dans ce cas des câbles de raccordements électrique du panneau traverse la paroi dudit caisson ventilé, de préférence de manière étanche.

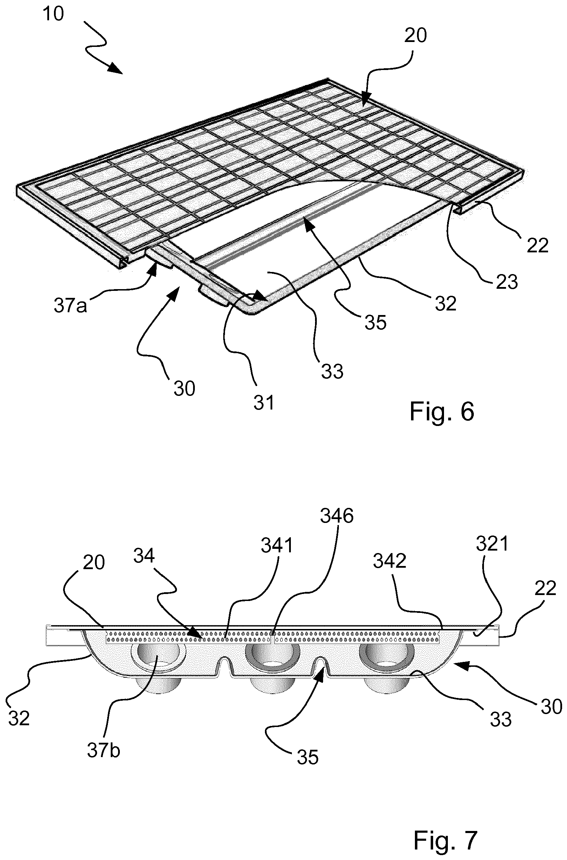

Les figures 6 et 7 représentent un deuxième mode de réalisation d'un panneau 10 suivant l'invention.

Pour la description de ce deuxième exemple d'un mode de réalisation d'un panneau 10, des éléments identiques ou similaires portent les mêmes repères que pour le premier exemple illustré par les figures 1 à 5.

Le panneau 10 de la figure 6 comporte un caisson ventilé 30 et un capteur 20.

Le capteur 20 est un capteur photovoltaïque conventionnel comme dans le premier exemple décrit et le panneau de la figure 6 diffère principalement par des détails de réalisation du caisson ventilé 30.

Dans ce cas le caisson ventilé 30 comporte des longerons 35, trois longerons dans l'exemple illustré, qui sont formés intégralement avec le fond 33 dudit caisson ventilé.

Le ou les longerons 35 sont par exemple réalisés lors d'une opération de thermoformage d'une plaque d'un polymère thermoplastique au cours de laquelle opération le fond 33, la bordure 32 et le retour de bordure 321 sont réalisés.

Dans ce mode de réalisation, un longeron 35 correspond à une ondulation du fond 33 et ne comporte pas d'ouvertures, qui auraient la conséquence de mettre le volume intérieur du caisson ventilé avec l'extérieur dudit caisson ventilé.

Pour permettre la circulation du gaz caloporteur dans le caisson, y compris entre les sous-volumes délimités par les longerons 35, une hauteur des dits longerons est limitée de sorte qu'un espace libre soit maintenu entre un sommet des longerons et la face inférieure 23 du capteur 20. La hauteur des longerons est avantageusement comprise entre 70% et 30% de la hauteur intérieure du caisson et le sommet de chaque longeron est tel qu'un espace est maintenu entre ledit sommet et des traverses 34 fixées sur la face inférieure 23 du capteur 20.

Les traverses 34, non visibles sur le panneau partiellement écorché de la figure 6 sont similaires aux traverses du premier mode de réalisation décrit.

Suivant l'exemple de réalisation de la figure 7, l'âme 341 d'une traverse comporte des ouvertures 343 comme déjà décrit et pour assurer les mêmes fonctions. La semelle 342 d'une traverse présente les caractéristiques d'être sans ouvertures et de s'étendre, suivant la direction perpendiculaire aux génératrices des traverses, de sorte que la face inférieure 23 du capteur 20 est sensiblement entièrement recouverte, pour la partie donnant sur l'intérieur du caisson ventilé 30, par l'ensemble des semelles des traverses du panneau 10. Ainsi la semelle d'une traverse est sensiblement jointive avec les semelles des traverses voisines, en pratique un jeu de un à quelques millimètres étant maintenu pour prendre en compte les tolérances de fabrication et de montage du panneau et pour permettre des dilatations sans introduire des contraintes mécaniques significatives.

Un tel agencement permet de réaliser une grande surface de contact avec le capteur 20 et ainsi de favoriser les échanges thermiques entre ledit capteur et les traverses qui sont fixées par collage sur la face inférieure 23 du capteur.

Comme dans le premier mode de réalisation, les âmes 341 des traverses sont interrompues aux extrémités des dites traverses avant les bordures 32 du caisson ventilé et les semelles se prolongent pour être maintenues entre le retour de bordure 321 et le capteur 20.

Dans une forme de réalisation, illustrée sur la figure 7, une traverse 34 est réalisée en au moins deux parties alignées indépendantes entre lesquelles est maintenu un espace, typiquement un espace 346 de un à quelques millimètres, qui permet en particulier d'absorber les effets des dilatations différentielles entre la traverse et le capteur et de diminuer des risques d'un décollement prématuré de la semelle de la traverse.

Dans l'exemple de réalisation illustré sur les figures 6 et 7, le caisson ventilé 30 comporte plusieurs ouvertures d'entrée 37a et plusieurs ouvertures de sortie 37b, trois de chaque catégorie dans l'exemple illustré.

Dans le panneau 10 constitué comme il vient d'être décrit de manière détaillée, un gaz, par exemple de l'air, est introduit par une ou des ouvertures d'entrée 37a et est extrait par une ou des ouvertures de sortie 37b.

La circulation est forcée dans le panneau 10 en maintenant une différence de pression entre les ouvertures d'entrée et de sortie, la pression étant supérieure au niveau d'une ouverture d'entrée utilisée comme admission du gaz dans le caisson à celle d'une ouverture de sortie pour l'extraction du gaz. La différence de pression est assurée par exemple par des turbines d'un système de circulation, non représenté, du gaz dans un réseau qui avantageusement est mis en oeuvre pour plusieurs panneaux.

En circulant dans le panneau, c'est-à-dire à l'intérieur du volume du caisson ventilé 30, entre la ou les ouvertures d'entrée 37a d'une part et la ou les ouvertures de sortie 37b d'autre part, le gaz est soumis à un cheminement dans lequel il doit traverser le caisson ventilé 30 et le cas échéant les ouvertures 353 du ou des longerons 35 déterminant les sous-volumes 36a, 36b.

Lors de ce cheminement, le gaz est également amené à circuler a proximité de la surface du capteur située du côté du caisson ventilé, circulation dans laquelle l'écoulement dans une couche d'épaisseur correspondant à la hauteur **h** des âmes 341 des traverses 41 est perturbé par les dites âmes des traverses.

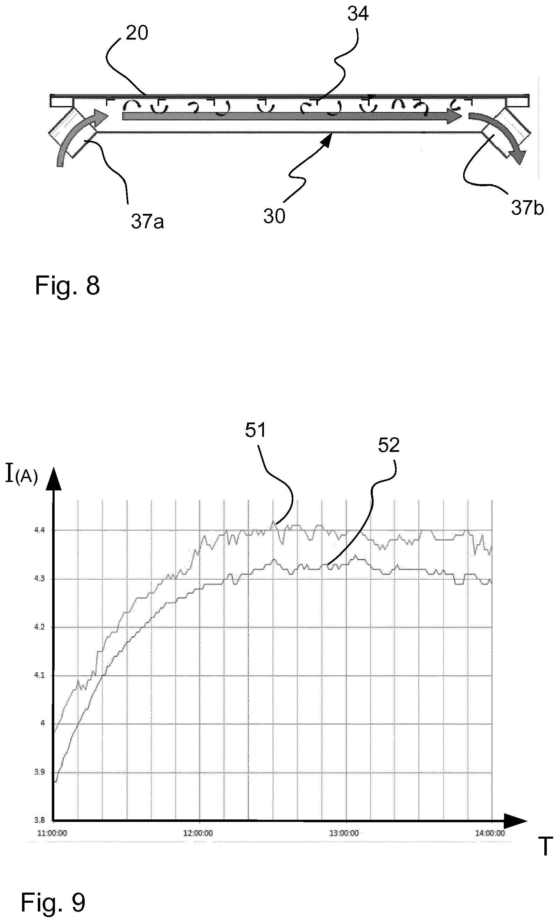

En raison des nombreuses ouvertures 343 dans les âmes 341 des traverses, l'écoulement du gaz à proximité du capteur 20 est rendu fortement turbulent, une partie du flux de l'écoulement transitant par les ouvertures 343 et une autre partie du flux contournant les traverses. Cette circulation du gaz dans le caisson ventilé 30 est illustrée schématiquement sur la figure 8, dans laquelle la flèche traversant le caisson ventilé entre les ouvertures 37a, 37b à des extrémités opposées dudit caisson symbolise l'écoulement d'ensemble du gaz et les flèches courbes à proximité du capteur 20 symbolisent la turbulence de l'écoulement local.

La turbulence a pour effet, par rapport à un écoulement laminaire ou moins turbulent, d'augmenter les échanges thermiques entre les âmes 341 des traverses, les dites âmes recevant elles-mêmes une partie importante de la chaleur du capteur 20 par conduction des semelles 342 dont les surfaces de contact et les qualités de conduction thermique assurent la transmission de chaleur depuis le capteur 20. La turbulence de l'écoulement qui est entretenue dans le caisson ventilé, en particulier à proximité du capteur 20, a également pour conséquences d'augmenter les échanges thermiques directs entre le capteur 20 et le gaz circulant dans le caisson ventilé.

Lorsque le capteur 20 est soumis en fonctionnement à un ensoleillement recherché, sa température s'élève au dessus de la température ambiante.

Le gaz circulant dans le caisson ventilé 30 est amené à une ouverture d'entrée 37a par laquelle il est introduit dans le caisson ventilé à une température d'entrée **Te** inférieure à une température **Tf** à laquelle il est souhaité maintenir le capteur 20 en fonctionnement. La température d'entrée **Te** est par exemple, mais non nécessairement, celle de l'air ambiant.

Dans le caisson ventilé 30, le gaz circule de manière turbulente comme il a été décrit précédemment et s'échauffe au contact du capteur et surtout au contact des âmes 341 des traverses 34 qui reçoivent et transfèrent une partie importante de la chaleur du capteur en raison de la surface de contact importante entre le capteur 20 et les semelles 342 des traverses, d'un matériau constitutif bon conducteur de la chaleur et d'un collage favorisant la conduction thermique entre ledit capteur et les dites traverses.

Du fait de ces transferts de chaleur, la température du gaz circulant dans le caisson ventilé s'élève pour atteindre lors de son extraction par l'ouverture de sortie 37b une température de sortie **Ts** voisine de la température du capteur 20.

La mesure de la température de sortie permet ainsi si besoin d'ajuster le débit de gaz en fonction de la température de capteur souhaitée et de la température du gaz en entrée, le débit étant alors dans ce cas une fonction de l'énergie reçue par le capteur et transformée sous forme de chaleur.

Une telle régulation permet en particulier d'obtenir une température de sortie **Ts** du gaz elle-même régulée ce qui permet une exploitation rationnelle de l'énergie thermique produite par le panneau 10, et le rendement thermique du panneau est si besoin amélioré par une isolation thermique complémentaire, non représentée, du caisson ventilé.

Dans un exemple non limitatif de réalisation d'un panneau 10 ayant un capteur 20 pour la production d'énergie électrique par des cellules photovoltaïques, d'environ un mètre carré et demi, le caisson ventilé est réalisé avec une épaisseur **E** de 80 mm, et chaque traverse 34 est réalisée suivant un profil en **L** inversé dans un alliage d'aluminium de 0,5 mm d'épaisseur l'âme 341 ayant une hauteur **h** de 22 mm et la semelle 342 ayant une largeur **X** de 22 mm.

Pour un tel panneau 10 soumis à des conditions de fonctionnement d'été en zone tempérée, le débit de gaz, par de l'air, est par exemple de l'ordre de 10 à 60 litres par seconde.

La figure 9 illustre à titre d'exemple les gains obtenus en production électrique d'un tel panneau 10 à partir d'un essai en conditions réelles.

Lors de cet essai un panneau d'un mètre carré conforme à l'invention était utilisé avec un débit de gaz constant de 30 litres par seconde avec une température d'entrée **Te** égale à la température ambiante de 15°C lors de l'essai.

Pour comparaison, un capteur fonctionnant sans le bénéfice du panneau de l'invention été placé dans les mêmes conditions ambiantes.

Comme le montrent les courbes courant délivré en fonction du temps de la figure 9, le panneau 10 conforme à l'invention délivre un courant, courbe 51, et donc une énergie électrique produite, supérieure de 2,5% au capteur conventionnel, courbe 52.

En outre la température de sortie **Ts** du gaz est augmentée en moyenne de 8°C par rapport à la température d'entrée **Te**, ceci en dehors de toute régulation pendant l'essai.

Le panneau ainsi obtenu, qui peut présenter de nombreuses variantes à la portée de l'homme du métier sans se départir de l'invention, permet d'améliorer sensiblement le rendement électrique des capteurs photovoltaïques en assurant une production simultanée d'énergie thermique. Le panneau en raison de la structure du caisson ventilé est d'une grande rigidité, assurant un support de qualité pour le capteur, et ceci avec une masse limitée du fait même de la structure en caisson et des matériaux de fabrication du caisson mis en oeuvre de l'utilisation d'un gaz comme fluide caloporteur.

## Revendications

1. Panneau (10) de production d'énergie électrique et d'énergie thermique, comportant un capteur (20) à cellules photovoltaïques (21), ledit capteur comportant un cadre (22) périphérique et ledit capteur étant fixé sur un système d'échange thermique destiné à la circulation d'un fluide caloporteur, dans lequel ledit système d'échange thermique est un caisson ventilé (30) comportant un fond (33) fermé, une bordure (32) fermée et une face supérieure (31) ouverte, ledit caisson ventilé comportant au moins une ouverture d'arrivée (37a) et au moins une ouverture de sortie (37b) d'un gaz destiné à traverser le caisson ventilé (30), **caractérisé en ce que**
- le capteur (20) est fixé par une face inférieure (23) dudit capteur sur la bordure (32) et du côté de la face supérieure (31) dudit caisson ventilé de sorte à créer un volume fermé du caisson ventilé (30) ;
- des dimensions du caisson ventilé (30) sont voisines et légèrement inférieures à des dimensions en plan du capteur (20) de sorte qu'une face inférieure (23) du capteur (20) soit appliquée sur une face supérieure (31) ouverte dudit caisson ventilé sans que le cadre (22) ne vienne en interférence avec ledit caisson ventilé, ledit cadre emboîtant sur ledit caisson ventilé.

2. Panneau suivant la revendication 1 dans lequel au moins une traverse (34) comportant au moins une âme (341) et comportant une semelle supérieure (342) est fixée par une face supérieure de ladite semelle supérieure à la face inférieure (23) du capteur (20), ladite au moins une traverse s'étend sensiblement d'un bord du caisson ventilé (30) à un bord opposé dudit caisson ventilé, et la ou les âmes (341) de ladite au moins une traverse se projettent dans le volume fermé du caisson ventilé (30) sur une hauteur **h** inférieure à une épaisseur **E** dudit caisson ventilé.

3. Panneau suivant la revendication 2 dans lequel la semelle (342) de l'au moins une traverse (34) est fixé par collage sur la face inférieure (23) du capteur (20) au moyen d'une colle à conduction thermique améliorée.

4. Panneau suivant la revendication 2 ou la revendication 3 dans lequel la hauteur **h** d'une âme (341) de l'au moins une traverse (34) est égale ou inférieure à la moitié de l'épaisseur **E** du caisson ventilé (30).

5. Panneau suivant l'une des revendications 2 à 4 dans lequel la ou les âmes (341) de l'au moins une traverse (34) comportent des ouvertures (343) réparties sur une longueur de ladite traverse.

6. Panneau suivant la revendication 5 dans lequel les ouvertures (343) d'une âme (341) de l'au moins une traverse (34) représentent une surface totale comprise entre 30% et 70% d'une surface de ladite âme.

7. Panneau suivant l'une des revendications 2 à 6 dans lequel l'au moins une traverse (34) comporte à des extrémités des extensions de semelle (344a, 344b) en appui sur un retour de bordure (321) de la bordure (32) du caisson ventilé (30).

8. Panneau suivant l'une des revendications 2 à 7 comportant une pluralité de traverses (34) agencées sensiblement parallèles entre elles.

9. Panneau suivant l'une des revendications précédentes dans lequel le caisson ventilé (30) comporte au moins un longeron (35) solidaire dudit caisson ventilé suivant une longueur L ou une largeur C dudit caisson ventilé, une âme (351) de chaque longeron (35) déterminant dans le caisson ventilé des sous-volumes (36a, 36b) séparés par ledit longeron, ladite âme étant agencée pour maintenir une surface ouverte entre lesdits sous-volumes.

10. Panneau suivant la revendication 9 dans lequel l'âme (351) de l'au moins un longeron est d'une hauteur correspondant sensiblement à une épaisseur intérieure du caisson ventilé (30) et comporte les ouvertures (353) réparties sur une longueur dudit longeron, une surface totale des dites ouvertures étant de préférence supérieure à 50% d'une surface de l'âme dudit longeron.

11. Panneau suivant la revendication 9 dans lequel l'âme (351) de l'au moins un longeron est d'une hauteur substantiellement inférieure à une épaisseur intérieure du caisson ventilé (30), de préférence d'une hauteur inférieure à 50% de l'épaisseur intérieur dudit caisson ventilé.

12. Panneau suivant l'une des revendications précédentes dans lequel la ou les ouvertures d'arrivée (37a) du caisson ventilé (30) sont pourvues chacune d'un manchon de raccordement, un axe dudit manchon étant orienté de sorte à converger vers la face inférieure (23) du capteur (20) dans le volume fermé dudit caisson ventilé.

13. Panneau suivant la revendication 10 prise en combinaison avec l'une des revendications 2 à 8 dans lequel chaque longeron (35) comporte à l'emplacement de chaque intersection dudit longeron avec une traverse (34) un ou des évidements (354) dans lequel est ou sont placées l'âme (341) ou les âmes de ladite traverse.

14. Panneau suivant l'une des revendications précédentes dans lequel le caisson ventilé (30) a une forme d'ensemble parallélépipédique rectangle et dans lequel le capteur (20) comporte un cadre (22) à l'intérieur duquel cadre ledit caisson ventilé est emboîté.

## Patentansprüche

1. Panel (10) für die Erzeugung von elektrischer Energie und von thermischer Energie, aufweisend einen Sensor (20) mit Photovoltaikzellen (21), wobei der Sensor einen peripheren Rahmen (22) aufweist und der Sensor auf einem Wärmetauschsystem befestigt ist, das für die Zirkulation eines Wärmeträgerfluids bestimmt ist, wobei das Wärmetauschsystem ein belüftetes Gehäuse (30) ist, das einen geschlossenen Boden (33), eine geschlossene Umrandung (32) und eine offene Oberseite (31) aufweist, wobei das belüftete Gehäuse mindestens eine Einlassöffnung (37a) und mindestens eine Auslassöffnung (37b) eines Gases aufweist, das bestimmt ist, das belüftete Gehäuse (30) zu durchqueren, **dadurch gekennzeichnet, dass**
- der Sensor (20) anhand einer Unterseite (23) des Sensors auf der Umrandung (32) und vonseiten der Oberseite (31) des belüfteten Gehäuses befestigt ist, so dass ein geschlossenes Volumen des belüfteten Gehäuses (30) gebildet wird;
- Abmessungen des belüfteten Gehäuses (30) ähnlich und leicht unter Abmessungen in der Ebene des Sensors (20) sind, so dass eine Unterseite (23) des Sensors (20) auf einer offenen Oberseite (31) des belüfteten Gehäuses aufliegt, ohne dass der Rahmen (22) mit dem belüfteten Gehäuse interferiert, wobei der Rahmen auf dem belüfteten Gehäuse steckt.

2. Panel nach Anspruch 1 wobei mindestens ein Querträger (34), der mindestens eine Seele (341) aufweist und eine obere Sohle (342) aufweist, anhand einer Oberseite der oberen Sohle an der Unterseite (23) des Sensors (20) befestigt ist, wobei sich der mindestens eine Querträger im Wesentlichen von einem Rand des belüfteten Gehäuses (30) zu einem gegenüberliegenden Rand des belüfteten Gehäuses erstreckt, und die Seele (n) (341) des mindestens einen Querträgers in das geschlossene Volumen des belüfteten Gehäuses (30) über eine Höhe h hineinragen, die kleiner als eine Stärke E des belüfteten Gehäuses ist.

3. Panel nach Anspruch 2, wobei die Sohle (342) des mindestens einen Querträgers (34) durch Kleben auf der Unterseite (23) des Sensors (20) mit Hilfe eines Klebstoffs mit verbesserter thermischer Leitung befestigt ist.

4. Panel nach Anspruch 2 oder Anspruch 3, wobei die Höhe h einer Seele (341) des mindestens einen Querträgers (34) gleich der oder kleiner als die Hälfte der Stärke E des belüfteten Gehäuses (30) ist.

5. Panel nach einem der Ansprüche 2 bis 4, wobei die Seele(n) (341) des mindestens einen Querträgers (34) Öffnungen (343) aufweisen, die über eine Länge des Querträgers verteilt sind.

6. Panel nach Anspruch 5, wobei die Öffnungen (343) einer Seele (341) des mindestens einen Querträgers (34) eine Gesamtfläche darstellen, die zwischen 30 % und 70 % einer Fläche der Seele liegt.

7. Panel nach einem der Ansprüche 2 bis 6, wobei der mindestens eine Querträger (34) an Enden Sohlenerweiterungen (344a, 344b) aufweist, die sich auf einem Umrandungsumschlag (321) der Umrandung (32) des belüfteten Gehäuses (30) abstützen.

8. Panel nach einem der Ansprüche 2 bis 7, aufweisend eine Vielzahl von Querträgern (34), die im Wesentlichen parallel zueinander eingerichtet sind.

9. Panel nach einem der vorangehenden Ansprüche, wobei das belüftete Gehäuse (30) mindestens einen Längsträger (35) aufweist, der mit dem belüfteten Gehäuse gemäß einer Länge L oder einer Breite C des belüfteten Gehäuses fest verbunden ist, wobei eine Seele (351) jedes Längsträgers (35) in dem belüfteten Gehäuse Untervolumen (36a, 36b) festlegt, die durch den Längsträger getrennt sind, wobei die Seele eingerichtet ist, um zwischen den Untervolumen eine Fläche offen zu halten.

10. Panel nach Anspruch 9, wobei die Seele (351) des mindestens einen Längsträgers eine Höhe hat, die im Wesentlichen einer inneren Stärke des belüfteten Gehäuses (30) entspricht und Öffnungen (353) aufweist, die über eine Länge des Längsträgers verteilt sind, wobei eine Gesamtfläche der Öffnungen vorzugsweise größer als 50 % einer Fläche der Seele des Längsträgers ist.

11. Panel nach Anspruch 9, wobei die Seele (351) des mindestens einen Längsträgers eine Höhe hat, die substantiell unter einer inneren Stärke des belüfteten Gehäuses (30) ist, vorzugsweise eine Höhe kleiner als 50 % der inneren Stärke des belüfteten Gehäuses.

12. Panel nach einem der vorangehenden Ansprüche, wobei die Einlassöffnung(en) (37a) des belüfteten Gehäuses (30) jeweils mit einer Verbindungsmanschette versehen sind, wobei eine Achse der Manschette derart ausgerichtet ist, dass sie zu der Unterseite (23) des Sensors (20) in das geschlossene Volumen des belüfteten Gehäuses konvergiert.

13. Panel nach Anspruch 10, herangezogen in Kombination mit einem der Ansprüche 2 bis 8, wobei jeder Längsträger (35) an der Stelle jedes Schnittpunkts des Längsträgers mit einem Querträger (34) eine oder Aussparungen (354) aufweist, in welche die Seele (341) oder die Seelen des Querträgers platziert ist oder sind.

14. Panel nach einem der vorangehenden Ansprüche, wobei das belüftete Gehäuse (30) insgesamt eine parallelepipedische rechteckige Form hat und wobei der Sensor (20) einen Rahmen (22) aufweist, in dessen Inneren das belüftete Gehäuse eingesteckt ist.

## Claims

1. Panel (10) for producing electrical energy and thermal energy, comprising a collector (20) with photovoltaic cells (21), said collector comprising a peripheral frame (22) and said collector being fixed on a thermal exchange system intended for the circulation of a heat transfer fluid, wherein said thermal exchange system is a ventilated caisson (30) comprising a closed bottom (33), a closed edge (32) and an opened upper face (31), said ventilated caisson comprising at least one inlet opening (37a) and at least one outlet opening (37b) for a gas intended to pass through the ventilated caisson (30), **characterised in that**
- the collector (20) is fixed by a lower face (23) of said collector on the edge (32) and on the side of the upper face (31) of said ventilated caisson in such a way as to create a closed volume of the ventilated caisson (30);
- the dimensions of the ventilated caisson (30) are close and slightly less than the dimensions in the plane of the collector (20) in such a way that a lower face (23) of the collector (20) is applied on an upper open face (31) of said ventilated caisson without the frame (22) interfering with said ventilated caisson, said frame nesting onto said ventilated caisson.

2. Panel according to claim 1 wherein at least one crosspiece (34) comprising at least one core (341) and comprising an upper sole (342) is fixed by un upper face of said open sole to the lower face (23) of the collector (20), said at least one crosspiece substantially extends from one edge of the ventilated caisson (30) to an opposite edge of said ventilated caisson, and the core or the cores (341) of said at least one crosspiece are projected into the closed volume of the ventilated caisson (30) over a height h less than a thickness E of said ventilated caisson.

3. Panel according to claim 2 wherein the sole (342) of the at least one crosspiece (34) is fixed by gluing onto the lower face (23) of the collector (20) by means of an improved thermal conduction glue.

4. Panel according to claim 2 or claim 3 wherein the height h of a core (341) of at least one crosspiece (34) is less than or equal to half the thickness E of the ventilated caisson (30).

5. Panel according to one of claims 2 to 4 wherein the core or the cores (341) of the at least one crosspiece (34) comprise openings (343) distributed over a length of said crosspiece.

6. Panel according to claim 5 wherein the openings (343) of a core (341) of at least one crosspiece (34) represent a total surface between 30% and 70% of a surface of said core.

7. Panel according to one of claims 2 to 6 wherein the at least one crosspiece (34) comprises at ends sole extensions (344a, 344b) bearing against a return edge (321) of the edge (32) of the ventilated caisson (30).

8. Panel according to one of claims 2 to 7 comprising a plurality of crosspieces (34) arranged substantially parallel to one another.

9. Panel according to one of the preceding claims wherein the ventilated caisson (30) comprises at least one solebar (35) integral with said ventilated caisson along a length L or a length C of said ventilated caisson, a core (351) of each solebar (35) determining in the ventilated caisson sub-volumes (36a, 36b) separated by said solebar, said core being arranged in order to maintain an open surface between said sub-volumes.

10. Panel according to claim 9 wherein the core (351) of the at least one solebar is of a height corresponding substantially to an inner thickness of the ventilated caisson (30) and comprises the openings (353) distributed over a length of said solebar, with a total surface of said openings being more preferably greater than 50% of a surface of the core of said solebar.

11. Panel according to claim 9 wherein the core (351) of the at least one solebar is of a height substantially less than an inner thickness of the ventilated caisson (30), preferably of a height less than 50% of the inner thickness of said ventilated caisson.

12. Panel according to one of the preceding claims wherein the inlet opening or openings (37a) of the ventilated caisson (30) are each provided with a coupling sleeve, with an axis of said sleeve being oriented in such a way as to converge towards the lower face (23) of the collector (20) in the closed volume of said ventilated caisson.

13. Panel according to claim 10 taken in combination with one of claims 2 to 8 wherein each solebar (35) comprises at the location of each intersection of said solebar with a crosspiece (34) a recess or recesses (354) wherein the core or the cores (341) of said crosspiece are placed.

14. Panel according to one of the preceding claims wherein the ventilated caisson (30) has a general rectangle parallelepiped shape and wherein the collector (20) comprises a frame (22) inside of which the ventilated caisson is nested.
